(19) **Europäisches Patentamt**

**European Patent Office**

**Office européen des brevets**

(11) Publication number: **0 416 125 A1**

(12) **EUROPEAN PATENT APPLICATION**
**published in accordance with Art. 158(3) EPC**

(21) Application number: **90904665.8**

(22) Date of filing: **19.03.90**

(86) International application number:
**PCT/JP90/00365**

(87) International publication number:
**WO 90/11459 (04.10.90 90/23)**

(51) Int. Cl.⁵: **F16D 3/04**

(30) Priority: **20.03.89 JP 65974/89**

(43) Date of publication of application:
**13.03.91 Bulletin 91/11**

(84) Designated Contracting States:
**DE FR GB**

(71) Applicant: **FANUC LTD.**
**3580, Shibokusa Aza-Komanba, Oshino-mura**
**Minamitsuru-gun, Yamanashi 401-05(JP)**

(72) Inventor: **ASABA, Eiki Fanuc Mansion**
**Harimomi 6-205**
**3537-1, Shibokusa Oshino-mura**
**Minamitsuru-gun**
**Yamanashi 401-05(JP)**
Inventor: **TAGAMI, Kiyoshi 72-9, Mitsuidai**
**719-285, Yanomachi Hachioji-shi**
**Tokyo 192(JP)**
Inventor: **TANABE, Yoshihito Fanuc Dai-3**
**Vira-Karamatsu**
**3527-1, Shibokusa Oshino-mura**
**Minamitsuru-gun**
**Yamanashi 401-05(JP)**

(74) Representative: **Jackson, Peter Arthur et al**
**Gill Jennings & Every, 53-64 Chancery Lane**
**London WC2A 1HN(GB)**

(54) **OLDHAM COUPLING.**

(57) In general, in a metallic Oldham coupling, the transmission of a rotational force between a pair of rotary shafts cannot be carried out accurately due to the existence of a clearance. According to the present invention, an Oldham coupling body (18) is molded of a resin, and the end portions (12A, 12B) of rotary shafts (10A, 10B), i.e. members to be coupled are respectively engaged with recesses (30,32). Since the widths (LY, LX) of these recesses vary greatly with temperature, the variations of the widths are restricted by a metallic size restriction member (16). In order to prevent respective clearances from occuring in the longitudinal direction (Z) of the rotary shafts and in the direction of the depth of the recesses (30, 32) between the end portions (12A, 12B) of the rotary shafts and the recesses, a pressing force is applied constantly in the longitudinal direction (Z) by spring members (14A, 14B) provided there between.

# Fig.1

## OLDHAM COUPLING

### TECHNICAL FIELD

The present invention relates to an oldham coupling using a resin material. This is used for connecting the output shaft of a servo motor and the shaft of a detector for detecting the rotation of the servo motor or for connecting the ball screw shaft of a machine tool and the shaft of a detector for detecting the rotation of the ball screw shaft.

### BACKGROUND ART

In general, oldham coupling uses metallic coupling members, but at the engagement portion with the rotary shafts being coupled there are clearances with the ends of the rotary shafts in the longitudinal direction. If these clearances exist, there are the problems that the oldham coupling easily inclines and therefore accurate transmission of rotation cannot be performed between the rotary shafts and that the fabrication of the oldham coupling becomes expensive since a high degree of precision is required.

### DISCLOSURE OF THE INVENTION

Therefore, the present invention has as its object the resolution of the above problem by providing an oldham coupling which can improve the precision of the transmission of the rotation and be made at a low cost.

In view of the above object, the present invention provides an oldham coupling which connects a pair of separated rotary shafts, which oldham coupling is provided with an oldham coupling body comprised of a resin material having engagement portions formed at two faces for engagement of ends of the pair of rotary shafts, a metallic dimension limiting member which limits the dimensions of engagement, in a direction perpendicular to the slidable direction of the ends of the rotary shafts with respect to the corresponding engagement portion of the faces, and an elastic means which applies an elastic force at all times between the engagement portion and the ends in the longitudinal direction of the rotary shafts and is provided at least at one of the faces.

The oldham coupling body can be easily made by injection molding since it is made of a resin material, but the rate of heat expansion is large and the dimensions of the engagement portion for engagement with the ends of the rotary shafts easily fluctuate. Therefore, a metallic dimension limiting member is attached. Further, even if the dimensions between the ends of the pair of rotary shafts, i.e., the coupled members, change from predetermined dimensions, the oldham coupling body is continuously pressed in the axial direction between the ends, so the oldham coupling body never inclines and therefore the precision of transmission of rotation is improved.

### BRIEF DESCRIPTION OF THE DRAWINGS

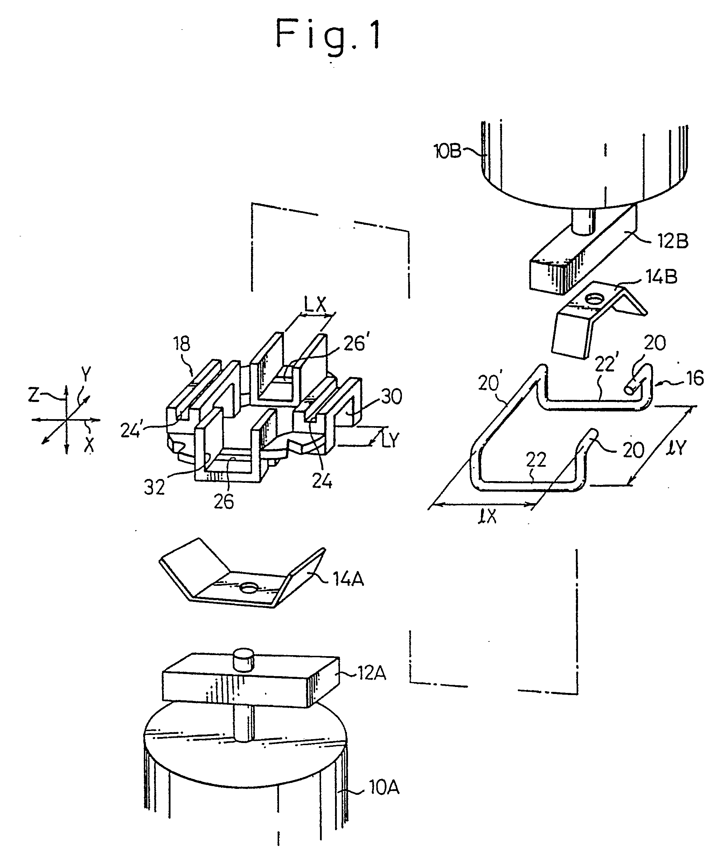

Figure 1 is a perspective view of the oldham coupling according to the present invention in a disassembled state.

### BEST MODE FOR CARRYING OUT THE INVENTION

Below, the present invention will be explained in further detail based on the embodiment shown in the attached drawing. Referring to Fig. 1, a pair of rotary shafts 10A and 10B are provided with end members 12A and 12B, respectively, for engagement with the oldham coupling body 18. The oldham coupling body 18 is made by injection molding of a resin material, for which a polyacetal etc. with a high lubricating property and wear resistance is suitable. Since injection molding is used, complicated shapes of couplings can be manufactured cheaply as explained below.

Concave portions 30 and 32 are formed extending in perpendicular X and Y directions and with openings facing opposite directions. The dimensions of the openings LY and LX of these concave portions 30 and 32 are matched with the dimensions of the widths of the above-mentioned end members 12A and 12B at ordinary temperature, which are made to be relatively slidable in the X direction and Y direction, respectively. Of course, the relative sliding is slight and is based on the deviation of the axial centers of the pair of rotary shafts 10A and 10B. Further, as illustrated, there are formed a set of elongated concave portions 26 and 26' parallel to the direction of extension of the concave portion 30 and another set of elongated concave portions 24 and 24' parallel to the direction of extension of the concave portion 32. The oldham coupling body 18 is susceptible to the effects of temperature changes since it is made by a resin material and is fitted with a metallic dimension limiting member 16 to prevent occurrence of clearance at the engagement of the end members 12A and 12B. That is, the dimension of separation 1X of the parallel portions 20 and 20' of the member 16 is made to match the dimension of separation of the other set of elongated concave portions 24 and 24' at ordinary temperature. The parallel portion 20 is made to engage with the concave portion 24, and the parallel portion 20' with the concave portion 24' in the attachment. Further, the dimension of separation 1Y of the parallel portions 22 and 22' of the member 16 is made to match the dimension of separation of the above-mentioned pair of elongated concave portions 26 and 26' at ordinary temperature, with the parallel portion 22 engaging with the concave portion 26 and the parallel portion 22' with the concave portion 26'. The member 16 is formed by bending a single wire material as shown in the figure and gives a spring force for enabling attachment to the oldham coupling body 18. When the member 16 is attached to the oldham coupling body 18 as mentioned above, expansion of the dimension of width LY in the Y direction of the concave portion 30, engaging with the end member 12A, to larger than even the end member 12A due to rises in temperature is limited by the portion 20' of the member 16 and further the dimension of width LX in the X direction of the concave portion 32, engaging with the end member 12B, to larger than even the said end member 12B is limited by the portions 22 and 22' of the member 16.

In place of the above-mentioned dimension limiting member 16, it is possible to limit the fluctuation of the dimensions LX and LY due to temperature changes, even with engagement with the elongated concave portions 24 and 24' or 26 and 26' of the coupling body 18 using two U-shaped metallic members.

Two plate spring members 14A and 14B are inserted between the concave portion 30 and the end member 12A and the concave portion 32 and the end member 12B so that an elastic force can be applied at all times in the longitudinal direction of the rotary shafts 10A and 10B, i.e., the Z direction. The plate spring members 14A and 14B push the all dam coupling body 18 in the direction of the end members 12A and 12B of the opposing sides so that even if the dimensions of separation of the end members 12A and 12B of the pair of rotary shafts 10A and 10B deviate slightly from the predetermined set value or fluctuate due to some reason or another after assembly, no looseness is caused between the concave portions 30 and 32 of the oldham coupling body 18 and the corresponding end members 12A and 12B. Therefore, the oldham coupling body 18 does not incline with respect to the longitudinal direction Z of the rotary shafts 10A and 10B and the precision of transmission of rotation is improved.

There need not be the two above-mentioned plate springs 14A and 14B, i.e., use may be made of only one. Further, use may be made of another spring member as well so long as it has a spring property only in the Z direction. For example, when the oldham coupling body 18 is made by injection molding, the spring portions may be formed by resin material at the bottom of the concave portions 30 and 32.

As clear from the above explanation, according to the present invention, the oldham coupling body is made by injection molding, so reduction of costs becomes possible and provision can be made of a compact coupling thin in the longitudinal direction of the rotary shafts. Further, since a metallic dimension limiting member is attached, dimensional changes of the coupling body due to temperature changes can be reduced to the same amount of changes as with the rotary shafts which are driven and no looseness occurs in the circumferential direction during rotation. Further, since an elastic member having a biasing force in the longitudinal direction of the rotary shafts is attached, the coupling body does not incline. The above two points improve the precision of transmission of rotation. Further, the use of the dimension limiting member means that the manufacturing precision of the coupling body may be rough and manufacture by injection molding can be facilitated.

4

## <u>LIST OF REFERENCE SYMBOLS</u>

```
10A and 10B... rotary shaft
12A and 12B... end member
14A and 14B... plate spring member
16... metallic dimension limiting member
18... oldham coupling body
30... concave portion engaging with end member 12A
32... concave portion engaging with end member 12B
```

### Claims

1. An oldham coupling which connects a pair of separated rotary shafts, which oldham coupling is provided with an oldham coupling body comprised of a resin material having engagement portions formed at two faces for engagement of ends of the pair of rotary shafts, a metallic dimension limiting member which limits the dimensions of engagement, in a direction perpendicular to the slidable direction of the ends of the rotary shafts with respect to the corresponding engagement portions of said faces, and an elastic means which applies an elastic force at all times between the engagement portion and the end in the longitudinal direction of the rotary shafts and is provided at least at one of the faces.

2. An oldham coupling according to claim 1, wherein said elastic means is comprised of a metallic plate spring member.

3. An oldham coupling according to claim 1, wherein said elastic means is comprised of a resin portion formed integrally with said resin oldham coupling body.

# Fig.1

# INTERNATIONAL SEARCH REPORT

International Application No PCT/JP90/00365

**I. CLASSIFICATION OF SUBJECT MATTER** (if several classification symbols apply, indicate all) [6]

According to International Patent Classification (IPC) or to both National Classification and IPC

Int. Cl$^5$  F16D3/04

**II. FIELDS SEARCHED**

| Minimum Documentation Searched [7] | |
|---|---|
| Classification System | Classification Symbols |
| IPC | F16D3/04 |

| Documentation Searched other than Minimum Documentation to the Extent that such Documents are included in the Fields Searched [8] |
|---|
| Jitsuyo Shinan Koho            1926 – 1989 |
| Kokai Jitsuyo Shinan Koho      1971 – 1989 |

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| A | JP, Y1, 48-14979 (Max Co., Ltd.), 25 April 1973 (25. 04. 73), Lines 4 to 23, column 2, (Family: none) | 1 |
| A | JP, U, 56-165124 (Sony Corp.), 7 December 1981 (07. 12. 81), Figs. 2 to 5, (Family: none) | 1 |
| A | JP, U, 58-119629 (Clarion Co., Ltd.), 15 August 1983 (15. 08. 83), Figs. 3 to 4, (Family: none) | 1 |
| A | JP, Y2, 56-48987 (Clarion Co., Ltd.), 16 November 1981 (16. 11. 81), Line 30, column 2 to line 3, column 6, (Family: none) | 2 |

\* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| April 23, 1990 (23. 04. 90) | May 14, 1990 (14. 05. 90) |
| International Searching Authority | Signature of Authorized Officer |
| Japanese Patent Office | |

Form PCT/ISA/210 (second sheet) (January 1985)